# EUROPÄISCHE PATENTSCHRIFT

(11) **EP 4 172 017 B1**
(45) Veröffentlichungstag und Bekanntmachung des Hinweises auf die Patenterteilung: **06.08.2025**
(21) Anmeldenummer: 21730194.4
(22) Anmeldetag: 02.06.2021
(51) Int. Cl.: B60W 30/09

(54) **VERFAHREN ZUM BETREIBEN EINES FAHRERASSISTENZSYSTEMS UND FAHRERASSISTENZSYSTEM**
METHOD FOR OPERATING A DRIVER ASSISTANCE SYSTEM, AND DRIVER ASSISTANCE SYSTEM
PROCÉDÉ PERMETTANT DE FAIRE FONCTIONNER UN DISPOSITIF D'AIDE À LA CONDUITE, AINSI QUE DISPOSITIF D'AIDE À LA CONDUITE

(30) Priorität: 29.06.2020 DE 102020207990
(43) Veröffentlichungstag der Anmeldung: 03.05.2023
(73) Patentinhaber: VOLKSWAGEN AKTIENGESELLSCHAFT, 38440 Wolfsburg (DE)
(72) Erfinder: MILCH, Stefan, 38162 Hemkenrode (DE); JUNGBLUTH, Andreas, 38114 Braunschweig (DE); RIELING, Jörg, 38116 Braunschweig (DE)
(86) Internationale Anmeldenummer: PCT/EP2021/064730
(87) Internationale Veröffentlichungsnummer: WO 2022/002516

(56) Entgegenhaltungen:
- EP-A1- 3 560 778
- WO-A2-2020/006154
- DE-A1- 102017 220 935
- US-A1- 2018 173 225
- US-B1- 10 023 204
- US-B2- 9 487 138

## Beschreibung

Die Erfindung betrifft gemäß Patentanspruch 1 ein Verfahren zum Betreiben eines Fahrerassistenzsystems. Gemäß Patentanspruch 12 betrifft die Erfindung ein Fahrerassistenzsystem, das dazu ausgebildet ist, das Verfahren zum Betreiben des Fahrerassistenzsystems durchzuführen.

Heutzutage werden moderne Kraftfahrzeuge üblicherweise mit einer Vielzahl von Fahrerassistenzsystemen ausgerüstet, um Verkehrsunfälle zu vermeiden, einen Fahrer des Kraftfahrzeugs beim Vermeiden eines Verkehrsunfalls zu unterstützen und/oder zumindest eine Schwere eines nicht mehr vermeidbaren Verkehrsunfalls zu verringern. Hierbei reicht ein Funktionsumfang der Fahrerassistenzsysteme von einem Ausgeben einer akustischen, optischen und/oder haptischen Warnmeldung bis hin zu einem vollautomatischen bzw. autonomen Eingreifen in einen Fahrbetrieb des Kraftfahrzeugs und infolgedessen ein Eingreifen auf eine momentane Fahrtrajektorie des Kraftfahrzeugs, das mit dem Fahrerassistenzsystem ausgerüstet ist. Für eine Wirksamkeit und insbesondere für eine Akzeptanz eines Fahrerassistenzsystems, das beispielsweise als ein Warn- und/oder Notbremssystem ausgebildet sein kann, ist es von entscheidender Bedeutung, dass das Fahrerassistenzsystem in lediglich tatsächlich kritischen Situationen in den Fahrbetrieb des Kraftfahrzeugs eingreift und/oder dem Fahrer des Kraftfahrzeugs eine entsprechende Warnmeldung ausgibt. Denn zum einen würden unnötige Warnsignale den Fahrer ablenken, insbesondere wenn die Situation vom Fahrer selbst als unkritisch wahrgenommen wird. Zum anderen aber soll die Warnmeldung bzw. das Warnsignal rechtzeitig genug ausgegeben werden, sodass der Fahrer noch adäquat reagieren kann. Es besteht also ein Zielkonflikt bei der Auslegung der Fahrerassistenzsysteme.

Um diesen Zielkonflikt zumindest teilweise zu lösen, sind bei einer Auslegung des entsprechenden Fahrerassistenzsystems Annahmen über eine Reaktionszeit des Fahrers zu treffen. So offenbart beispielsweise die EP 2 747 027 A1 ein Verfahren zum Abschätzen einer Sichtbarkeit von Objekten in einem Sichtfeld eines Fahrers eines Fahrzeugs, wobei ein Bild mittels einer Kamera aufgenommen wird und mittels eine Kontrastsensitivitätsfunktion der menschliche Sehapparat simuliert wird, wobei abhängig von der Sichtbarkeit der Objekte in dem Sichtfeld des Fahrers eine Reaktionszeit des Fahrers bestimmt wird und abhängig davon wenigstens eine Funktionseinheit des Fahrzeugs betrieben wird.

Ferner offenbart die DE 10 2009 034 386 A1 eine Fahrtunterstützungsvorrichtung bzw. ein Fahrerassistenzsystem zum Erkennen von Zuständen in einer Umgebung eines Fahrzeugs und zum Bereitstellen einer Fahrtunterstützung für den Fahrer des Fahrzeugs. Hierbei wird mittels der Fahrtunterstützungseinheit basierend auf einer Kollisionsgefahr eine Warnung ausgegeben, wobei ein Zeitpunkt der Ausgabe der Warnung für ein Hindernis eines zweiten Typs ein früherer Zeitpunkt ist als der Zeitpunkt für die Ausgabe einer Warnung für ein Hindernis eines ersten Typs. Eine Kollisionsgefahr für das Hindernis des zweiten Typs wird als höher bewertet als eine Kollisionsgefahr für das Hindernis des ersten Typs.

Ferner offenbart die DE 10 2017 220 935 A1 ein Fahrerassistenzsystem für ein Fahrzeug. Dieses ist eingerichtet, eine zeitlichen Verlauf von Blickinformationen darüber zu ermitteln, wohin der Blick eines Fahrers des Fahrzeugs gerichtet ist.

Aufgabe der vorliegenden Erfindung ist es, die Sicherheit im Straßenverkehr noch weiter zu erhöhen.

Diese Aufgabe wird durch ein Verfahren mit den im Patentanspruch 1 angegebenen Merkmalen und durch ein Fahrerassistenzsystem mit den im Patentanspruch 12 angegebenen Merkmalen gelöst. Merkmale und Vorteile und vorteilhafte Ausgestaltungen des erfindungsgemäßen Verfahrens sind als Merkmale, Vorteile und vorteilhafte Ausgestaltungen des erfindungsgemäßen Fahrerassistenzsystems anzusehen, wobei das Fahrerassistenzsystem Mittel zum Durchführen des erfindungsgemäßen Verfahrens umfasst.

Es ist erfindungsgemäß ein Verfahren zum Betreiben eines Fahrerassistenzsystems vorgeschlagen. Das Fahrerassistenzsystem ist Teil einer Sicherheitsausstattung eines Kraftfahrzeugs, insbesondere Kraftwagens, und erfasst eine dem mit dem Fahrerassistenzsystem ausgestatteten Kraftfahrzeug drohende Kollision mit wenigstens einem möglichen Kollisionsobjekt. Anders ausgedrückt erfasst das Fahrerassistenzsystem eine Gefahrensituation, die dadurch charakterisiert ist, dass die Kollision bzw. ein Unfall zwischen dem Kraftfahrzeug, das im Folgenden als Egokraftfahrzeug bezeichnet wird, und wenigstens einem der möglichen Kollisionsobjekte droht. Bei dem jeweiligen Kollisionsobjekt kann es sich beispielsweise um ein stationäres, das heißt ortsfestes sich nicht bewegendes Objekt in einer Umgebung des Egokraftfahrzeugs handeln. Des Weiteren kann es sich bei dem Kollisionsobjekt um einen weiteren Verkehrsteilnehmer, beispielsweise um ein von dem Egokraftfahrzeug unterschiedliches (weiteres) Kraftfahrzeug, um einen Radfahrer, um einen Fußgänger etc., handeln. Der weitere Verkehrsteilnehmer kann ein unbewegtes Objekt darstellen oder sich bewegen.

Wird also mittels des Fahrerassistenzsystems festgestellt, dass dem Egokraftfahrzeug eine Kollision mit wenigstens einem möglichen Kollisionsobjekt droht, wird in dem Egokraftfahrzeug mittels des Fahrerassistenzsystems ein Assistenzsignal bereitgestellt. Das Assistenzsignal weist insbesondere ein an den Fahrer des Egokraftfahrzeugs gerichtetes haptisches, optisches und/oder akustisches Warnsignal auf. Des Weiteren kann das Assistenzsignal ein Steuersignal aufweisen, anhand dessen das Egokraftfahrzeug zumindest teilweise steuerbar ist. Hierzu kann insbesondere vorgesehen sein, dass das Fahrerassistenzsystem mit einer Lenk- und Antriebseinheit des Egokraftfahrzeugs gekoppelt oder koppelbar ist, wobei die Lenk- und Antriebseinheit das Steuersignal des Assistenzsignals als Eingangssignal akzeptiert. In diesem Fall ist dann die Lenk- und Antriebseinheit dazu ausgebildet, anhand des Steuersignals das Egokraftfahrzeug längs und/oder quer zu beschleunigen. Das bedeutet, dass dann die Lenk- und Antriebseinheit des Egokraftfahrzeugs dazu ausgebildet ist, anhand des durch das Fahrerassistenzsystem bereitgestellten Steuersignals das Egokraftfahrzeug zu lenken, zu beschleunigen und/oder abzubremsen.

Bei dem Verfahren ist des Weiteren vorgesehen, dass ein Sichtfeld des (menschlichen) Fahrers des Egokraftfahrzeugs mittels einer Sensorik, beispielsweise einer kraftfahrzeuginternen Sensorik, insbesondere einer Sensorik des Fahrerassistenzsystems, erfasst wird, sodass anhand der Sichtweite eine voraussichtliche Reaktionszeit des Fahrers bestimmt wird.

Um nun die Sicherheit im Straßenverkehr mittels des Verfahrens noch weiter zu verbessern, ist erfindungsgemäß vorgesehen, dass eine Vielzahl von möglichen Kollisionsobjekten erfasst wird und eines davon, insbesondere ein einziges davon, als ein primäres Kollisionsobjekt eingestuft wird. Es wird dann ein Bereitstellungszeitpunkt, zu welchem das Assistenzsignal bereitgestellt wird, basierend auf der voraussichtlichen Reaktionszeit und auf einer voraussichtlichen Zeitspanne bis zur Kollision mit dem primären Kollisionsobjekt eingestellt. Das bedeutet, dass zum Bestimmen, wann das Assistenzsignal in dem Egokraftfahrzeug bereitgestellt wird, sowohl die voraussichtliche Reaktionszeit des Fahrers, die von der Sichtweite des Fahrers abhängt, als auch die voraussichtliche Zeitspanne bis zur Kollision mit dem primären Kollisionsobjekt einfließen.

Weiter kann ein auf den Fahrer, insbesondere auf dessen Sehapparat, gerichteter Sensor, etwa eine Fahrerbeobachtungskamera, zum Einsatz kommen, mittels dessen eine Blickrichtung des Fahrers erfasst wird. Dieser Sensor bzw. die Fahrerbeobachtungskamera ist insbesondere ein Bestandteil des Fahrerassistenzsystems und beispielsweise im Innenraum des Egokraftfahrzeugs auf den Fahrer gerichtet. Es wird dann mittels des Fahrerassistenzsystems ausgewertet, ob der Blick bzw. die Blickrichtung des Fahrers auf das primäre Kollisionsobjekt gerichtet ist oder wird. Abhängig davon erhöht oder verringert sich die voraussichtliche Reaktionszeit des Fahrers, die der Fahrer benötigt, um adäquat auf die Gefahrensituation zu reagieren und die drohende Kollision abzuwenden bzw. zu verhindern. Wird bei dem Verfahren ermittelt, dass der Blick des Fahrers nicht auf das primäre Kollisionsobjekt gerichtet ist oder gerade gerichtet wird, wird eine höhere voraussichtliche Reaktionszeit zum Reagieren auf die drohende Kollision von dem Fahrerassistenzsystem angenommen. Wird dahingegen ermittelt, dass der Blick des Fahrers auf das primäre Kollisionsobjekt gerichtet ist oder gerade gerichtet wird, wird von dem Fahrerassistenzsystem eine geringere Reaktionszeit angenommen. Es kann des Weiteren für das Verfahren bzw. im Laufe des Verfahrens ausgewertet werden, ob der Blick des Fahrers auf das primäre Kollisionsobjekt gerichtet gewesen ist. Mit anderen Worten kann ausgewertet werden, ob der Fahrer seinen Blick von dem primären Kollisionsobjekt (wieder) abwendet oder abgewendet hat. In diesem Fall ist davon auszugehen, dass der Fahrer das primäre Kollisionsobjekt zwar visuell wahrgenommen hat, aber nicht als das kritischste der Kollisionsobjekte erkannt und eingestuft hat. Hier ist dann ebenfalls von einer höheren voraussichtlichen Reaktionszeit auszugehen, da der Fahrer das primäre Kollisionsobjekt verkannt hat. Dementsprechend ist bei dem Verfahren vorgesehen, dass das Fahrerassistenzsystem eine höhere voraussichtliche Reaktionszeit annimmt als wenn der Fahrer seinen Blick auf das tatsächliche primäre Kollisionsobjekt gerichtet lässt.

Besonders vorteilhaft bei dem Verfahren ist, dass der Bereitstellungszeitpunkt besonders zweckmäßig eingestellt wird, sodass beispielsweise ein aufmerksamer Fahrer nicht in unnötiger Weise von dem Fahrerassistenzsystem gewarnt wird und/oder das Fahrerassistenzsystem nicht in unnötiger Weise in ein Fahrverhalten des Egokraftfahrzeugs eingreift, obwohl der Fahrer ausreichend aufmerksam ist. Gleichzeitig ist in günstiger Weise gewährleistet, dass das Fahrerassistenzsystem einen unaufmerksamen Fahrer früh genug warnt und/oder dass das Fahrerassistenzsystem früh genug in die Fahrdynamik des Egokraftfahrzeugs eingreift, um eine Kollision mit den Kollisionsobjekten zu vermeiden bzw. zu verhindern oder noch abzuwenden. Des Weiteren ist es ermöglicht, aus der Vielzahl der möglichen Kollisionsobjekte das primäre Kollisionsobjekt auszuwählen bzw. zu bestimmen, bei welchem es sich um das der möglichen Kollisionsobjekte handelt, mit dem eine Kollision des Egokraftfahrzeugs am wahrscheinlichsten ist.

Die anderen der Kollisionsobjekte sind demnach keine primären Kollisionsobjekte, sondern jeweilige sekundäre Kollisionsobjekte, mit denen ein Kollision des Egokraftfahrzeugs weniger wahrscheinlich ist. Demnach kann in vorteilhafter Weise eine Vorauswahl aus den Kollisionsobjekten getroffen werden, um nach dieser Vorauswahl bzw. nach dem Bestimmen des primären Kollisionsobjekts eine Kollisionsvorhersage über die Zeit prädiziert und betrachtet werden kann, wobei mittels des Fahrerassistenzsystems lediglich eine momentane Lage- und/oder Geschwindigkeitsbeziehung zwischen dem primären Kollisionsobjekt und dem Egokraftfahrzeug zu überwachen ist. Das bedeutet, dass das Fahrerassistenzsystem besonders effizient betreibbar ist, indem lediglich das kritischste der möglichen Kollisionsobjekte, nämlich das primäre Kollisionsobjekt, für die Kollisionsvorhersage bzw. für die Ermittlung der Gefahrensituation für das Egokraftfahrzeug herangezogen wird.

Es hat sich bei dem Verfahren als weiter vorteilhaft herausgestellt, wenn die möglichen Kollisionsobjekte mittels der Sensorik erfasst werden, selbst wenn zumindest eines der möglichen Kollisionsobjekte außerhalb des Sichtfelds des Fahrers ist. Denn es kann beispielsweise in verschiedenen Situationen dazu kommen, dass wenigstens eines oder einige der möglichen Kollisionsobjekte aufgrund von nachteiligen Sichtverhältnissen in einer Umgebung des Egokraftfahrzeugs von dem Fahrer zu spät, unvollständig oder überhaupt nicht gesehen werden. Diese nachteiligen bzw. negativen Sichtverhältnisse können beispielsweise bei Dunkelheit, bei Nebel, bei Gischt etc. gegeben sein. Alternativ oder zusätzlich kann das nachteilige Sichtverhältnis vorliegen, wenn zwischen dem entsprechenden möglichen Kollisionsobjekt und dem physiologischen Sehapparat des Fahrers ein Infrastrukturelement, beispielsweise eine Wand, eine (Werbe-)Tafel etc., ein weiterer Verkehrsteilnehmer, beispielsweise ein weiteres Fahrzeug, angeordnet sind/ist. Dann ist die Sichtlinie zwischen dem Sehapparat des Fahrers und dem möglichen Kollisionsobjekt durch das Infrastrukturelement bzw. durch den weiteren Verkehrsteilnehmer unterbrochen, sodass es dem menschlichen Fahrer nicht möglich ist, das mögliche Kollisionsobjekt mittels seines Sehapparats zu erfassen. Infolgedessen ist es dem menschlichen Fahrer daher unmöglich, auf das hinter aufgrund der nachteiligen Sichtverhältnisse verdeckte oder nicht sichtbare mögliche Kollisionsobjekt adäquat zu reagieren. Hier greift das Verfahren ein, das die möglichen Kollisionsobjekte erfasst, selbst wenn diese außerhalb des Sichtfelds des Fahrers liegen oder aus einem anderen Grund von dem Fahrer nicht optisch erkannt werden. Hierzu kann beispielsweise vorgesehen sein, dass die Sensorik einen Infrarotsensor aufweist, mittels dessen das entsprechende mögliche Kollisionsobjekt trotz der nachteiligen Sichtverhältnisse sensorisch erfasst wird, obwohl das entsprechende Kollisionsobjekt vom Fahrer nicht erkannt wird.

Ist also das Sichtfeld des Fahrers mittels der Sensorik erfasst und infolgedessen für das Verfahren bekannt, wobei das primäre Kollisionsobjekt außerhalb des Sichtfelds des Fahrers liegt oder im Sichtfeld des Fahrers aufgrund der negativen Sichtverhältnisse durch den Fahrer nicht erkennbar ist, dann wird beim Bestimmten der voraussichtlichen Reaktionszeit des Fahrers diese um eine Zeitspanne erhöht, die es dauert, bis das primäre Kollisionsobjekt vom Fahrer mittels seines Sehapparats erkannt wird. Das bedeutet, dass der Bereitstellungszeitpunkt, zu welchem das Assistenzsignal bereitgestellt wird, um diese Zeitspanne vorverlegt wird, sodass nach dem Ausgeben des Assistenzsignals, insbesondere wenn dieses als ein Warnsignal für den Fahrer ausgebildet ist, schon ausgegeben wird, wenn der Fahrer des Egokraftfahrzeugs das mögliche Kollisionsobjekt noch gar nicht gesehen hat. Insbesondere wird der Bereitstellungszeitpunkt so gewählt bzw. eingestellt, dass nach dem Ausgeben des Assistenzsignals der Fahrer noch genügend Zeit hat, um adäquat auf die drohende Kollision zu reagieren bzw. die drohende Kollision zu vermeiden.

Es hat sich des Weiteren als vorteilhaft herausgestellt, wenn die möglichen Kollisionsobjekte mittels einer von der kraftfahrzeuginternen Sensorik unterschiedlichen kraftfahrzeugexternen Sensorik erfasst werden, selbst wenn zumindest eines der möglichen Kollisionsobjekte außerhalb einer Sensorreichweite der kraftfahrzeuginternen Sensorik ist. Das bedeutet, dass das Fahrerassistenzsystem beispielsweise einen Datentransceiver aufweist, der zur Datenkommunikation mit anderen bzw. weiteren Kraftfahrzeugen und/oder mit einer Verkehrsinfrastruktur ausgebildet ist. Zusammengefasst ist dies unter Car-to-X-Kommunikation bekannt, was eine Fahrzeug-zu-Fahrzeug-Datenkommunikation und/oder eine Fahrzeug-zu-Verkehrsinfrastruktur-Datenkommunikation umfasst. Folglich ist es bei dem Verfahren vorgesehen, dass wenigstens eines der möglichen Kollisionsobjekte mittels der kraftfahrzeugexternen Sensorik erfasst wird, wobei dann ein jenes mögliche Kollisionsobjekt charakterisierender Datensatz an das Fahrerassistenzsystem bzw. an das Egokraftfahrzeug übermittelt wird. Dann zählt dieses mögliche Kollisionsobjekt, das mittels der kraftfahrzeugexternen Sensorik erfasst wird, ebenfalls zu dem Kreis der möglichen Kollisionsobjekte, aus welchem das primäre Kollisionsobjekt bestimmt wird.

Es kann des Weiteren vorgesehen sein, dass die kraftfahrzeugexterne Sensorik dazu eingesetzt wird, dass das Sichtfeld des Fahrers zu erfassen bzw. zu detektieren wird. Denn es kann zu Situationen kommen, in welchen die kraftfahrzeuginterne Sensorik das Sichtfeld des Fahrers als unbehindert bzw. als uneingeschränkt klassifiziert, wohingegen mittels der kraftfahrzeugexternen Sensorik, beispielsweise voraus einer geplanten Fahrtroute, die Sichtverhältnisse als negativ (siehe oben) eingestuft werden. So ist es mittels des Fahrerassistenzsystems bzw. mittels des Verfahrens ermöglicht, besonders vorausschauend den Bereitstellungszeitpunkt einzustellen.

In weiterer vorteilhafter Ausgestaltung des Verfahrens wird zum Bestimmen des primären Kollisionsobjekts den möglichen Kollisionsobjekten ein jeweiliger Vermeidungsbeschleunigungsbetrag zugeordnet, der einen erforderlichen Beschleunigungsbetrag charakterisiert, mit welchem das Egokraftfahrzeug zu beschleunigen ist, um eine Kollision mit dem jeweiligen möglichen Kollisionsobjekt zu vermeiden. Es wird dann das der möglichen Kollisionsobjekte als das primäre Kollisionsobjekt bestimmt, dem der höchste der Vermeidungsbeschleunigungsbeträge zugeordnet worden ist.

Der jeweilige Vermeidungsbeschleunigungsbetrag wird ausschließlich für mögliche Kollisionsobjekte definiert, mit denen eine Kollision prädiziert wird. Durch den Vermeidungsbeschleunigungsbetrag ist charakterisiert, unter welchem Beschleunigungsbetrag das Egokraftfahrzeug zu beschleunigen ist, um die drohende Kollision mit dem entsprechenden möglichen Kollisionsobjekt zu verhindern bzw. zu vermeiden.

Für das Bestimmen des primären Kollisionsobjekts gilt dann, dass lediglich eine einfache mathematische Operation durchgeführt wird, nämlich dass die Vermeidungsbeschleunigungsbeträge miteinander verglichen werden, wodurch das Bestimmten bzw. Einstufen des primären Kollisionsobjekts besonders einfach ist. Das wiederum bedeutet, dass das Fahrerassistenzsystem, das zum Durchführen des Verfahrens konfiguriert ist, besonders wenig Rechenleistung aufzubringen hat, um das primäre Kollisionsobjekt zu bestimmen. Das Fahrerassistenzsystem, das zum Durchführen des Verfahrens konfiguriert ist, ist folglich besonders (energie-)effizient betreibbar. Demnach ist ein mit dem Fahrerassistenzsystem ausgestattetes Kraftfahrzeug besonders kraftstoff- bzw. energieeffizient und/oder emissionsarm betreibbar.

Im Zusammenhang mit den Vermeidungsbeschleunigungsbeträgen hat es sich bei dem Verfahren als weiter vorteilhaft herausgestellt, dass - wenn mittels des Fahrerassistenzsystems erfasst wird, dass eine momentane Fahrtrajektorie des entsprechenden möglichen Kollisionsobjekts und eine momentane Fahrtrajektorie des Egokraftfahrzeugs einander, zum Beispiel senkrecht oder schräg, schneiden - dem dem entsprechenden Kollisionsobjekt zugeordneten Vermeidungsbeschleunigungsbetrag ein negatives Vorzeichen oder ein positives Vorzeichen zugewiesen wird. Anhand eines positiven Vermeidungsbeschleunigungsbetrags wird das Egokraftfahrzeug positiv - also geschwindigkeitszunehmend - beschleunigt. Anhand eines negativen Vermeidungsbeschleunigungsbetrags wird das Egokraftfahrzeug negativ - also geschwindigkeitsabnehmend oder -reduzierend - beschleunigt, das heißt gebremst.

Die Fahrtrajektorie des entsprechenden Kollisionsobjekts und die Fahrtrajektorie des Kraftfahrzeugs schneiden einander beispielsweise an einer Verkehrskreuzung, Einfahrten, Fahrstreifenverengungen, Grundstücksein- bzw. -ausfahrten etc. Um bei einer gegebenen Ausgangssituation die drohende Kollision zu vermeiden, bestehen oftmals zwei Möglichkeiten: Erstens könnte mittels des Egokraftfahrzeugs derart stark beschleunigt werden, dass das Egokraftfahrzeug die (designierte) Kollisionsstelle passiert hat, bevor das entsprechende Kollisionsobjekt die Kollisionsstelle überhaupt erreicht. Zweitens könnte mittels des Egokraftfahrzeugs derart gebremst werden, dass das entsprechende Kollisionsobjekt die (designierte) Kollisionsstelle passiert hat, bevor das Egokraftfahrzeug die Kollisionsstelle erreicht. Das bedeutet, dass dem jeweiligen möglichen Kollisionsobjekt zwei Vermeidungsbeschleunigungsbeträge zugeordnet werden können, nämlich ein positiver Vermeidungsbeschleunigungsbetrag und ein negativer Vermeidungsbeschleunigungsbetrag. Da in der Regel ein handelsübliches Kraftfahrzeug mit einem höheren Beschleunigungsbetrag bremsen als beschleunigen kann, kann vorgesehen sein, dass eine Gewichtung zwischen dem positiven Vermeidungsbeschleunigungsbetrag und dem negativen Vermeidungsbeschleunigungsbetrag erfolgt, um die drohende Kollision besonders effizient abzuwenden. Ist beispielsweise der mit dem positiven Vorzeichen versehende Vermeidungsbeschleunigungsbetrag (betragsmäßig) höher als der mit dem negativen Vorzeichen versehende Vermeidungsbeschleunigungsbetrag, kann vorgesehen sein, dass der positive Vermeidungsbeschleunigungsbetrag fallengelassen wird, da es effizienter - und vor allem sicherer - ist, das Egokraftfahrzeug entsprechend abzubremsen anstatt zu beschleunigen.

Entsprechend dem jeweiligen Betrag der ermittelten Vermeidungsbeschleunigungen lassen sich die möglichen Kollisionsobjekte - längs und/oder quer zum Egokraftfahrzeug bewegte mögliche Kollisionsobjekte - miteinander vergleichen, wobei die möglichen Kollisionsobjekte, denen ein höherer Vermeidungsbeschleunigungsbetrag zugewiesen wurde, für das Fahrerassistenzsystem bzw. für das Verfahren relevanter sind als die der möglichen Kollisionsobjekte, denen ein niedrigerer Vermeidungsbeschleunigungsbetrag zugewiesen worden ist.

Wird hingegen mittels des Fahrerassistenzsystems - wie einer weiteren Ausführungsform des Verfahrens zufolge - erfasst, dass die momentane Fahrtrajektorie des entsprechenden Kollisionsobjekts und die momentane Fahrtrajektorie des Egokraftfahrzeugs längs zueinander angeordnet sind, dann wird dem dem entsprechenden Kollisionsobjekt zugeordneten Vermeidungsbeschleunigungsbetrag ein negatives Vorzeichen zugewiesen. Eine derartige Situation stellt sich beispielsweise im Straßenverkehr dar, wenn das Egokraftfahrzeug im Längsverkehr hinter einem weiteren Kraftfahrzeug fährt. So kann eine Rechenleistung des Fahrerassistenzsystems noch weiter verringert werden, indem im Rahmen des Verfahrens lediglich einmal erfasst wird, ob das Egokraftfahrzeug in einer Längsverkehrssituation fährt, wonach dann das Verteilen bzw. Zuordnen von jeweils zwei Vermeidungsbeschleunigungsbeträgen zu den jeweiligen möglichen Kollisionsobjekten unterbleiben kann. Stattdessen wird jedem der möglichen Kollisionsobjekte dann nur ein Vermeidungsbeschleunigungsbetrag zugeordnet, nämlich ein negativer.

Alternativ zu dem Bestimmen des primären Kollisionsobjekts anhand des Vermeidungsbeschleunigungsbetrags ist in alternativer Ausgestaltung des Verfahrens vorgesehen, dass zum Bestimmen des primären Kollisionsobjekts den möglichen Kollisionsobjekten ein jeweiliger Herbeiführungsbeschleunigungsbetrag zugeordnet wird, der einen erforderlichen Beschleunigungsbetrag charakterisiert, mit welchem das Egokraftfahrzeug zu beschleunigen ist, um eine Kollision mit dem jeweiligen möglichen Kollisionsobjekt herbeizuführen. Zum Auswählen bzw. Bestimmen des primären Kollisionsobjekts aus den Kollisionsobjekten wird dann das der möglichen Kollisionsobjekte als das primäre Kollisionsobjekt bestimmt, dem der niedrigste der Herbeiführungsbeschleunigungsbeträge zugeordnet worden ist.

Der jeweilige Herbeiführungsbeschleunigungsbetrag wird lediglich dann für das jeweilige Kollisionsobjekt vergeben, wenn mit diesem keine Kollision prädiziert wird. Der Herbeiführungsbeschleunigungsbetrag charakterisiert also einen Beschleunigungsbetrag, mit dem das Egokraftfahrzeug zu beschleunigen ist, um überhaupt eine Kollision mit dem entsprechenden Kollisionsobjekt herbeizuführen.

Für das Bestimmen des primären Kollisionsobjekts gilt dann, dass lediglich eine einfache mathematische Operation durchgeführt wird, nämlich dass die Herbeiführungsbeschleunigungsbeträge miteinander verglichen werden, wodurch das Bestimmten bzw. Einstufen des primären Kollisionsobjekts besonders einfach ist. Das wiederum bedeutet, dass das Fahrerassistenzsystem, das zum Durchführen des Verfahrens konfiguriert ist, besonders wenig Rechenleistung aufzubringen hat, um das primäre Kollisionsobjekt zu bestimmen. Das Fahrerassistenzsystem, das zum Durchführen des Verfahrens konfiguriert ist, ist folglich besonders (energie-)effizient betreibbar. Demnach ist ein mit dem Fahrerassistenzsystem ausgestattetes Kraftfahrzeug besonders kraftstoff- bzw. energieeffizient und/oder emissionsarm betreibbar.

In weiterer vorteilhafter Ausgestaltung des Verfahrens ist vorgesehen, dass das primäre Kollisionsobjekt nur dann lediglich anhand des niedrigsten der Herbeiführungsbeschleunigungsbeträge bestimmt wird, wenn ein Zuordnen eines jeweiligen Vermeidungsbeschleunigungsbetrags zu allen der möglichen Kollisionsobjekte verhindert ist. Anders ausgedrückt wird lediglich dann dem jeweiligen möglichen Kollisionsobjekt ein Herbeiführungsbeschleunigungsbetrag oder mehrere Herbeiführungsbeschleunigungsbeträge zugewiesen, wenn keines der möglichen Kollisionsobjekte geeignet ist, um einen Vermeidungsbeschleunigungsbetrag zugewiesen zu bekommen. Sobald also nur eines der möglichen Kollisionsobjekte geeignet ist, dass diesem ein Vermeidungsbeschleunigungsbetrag zugewiesen werden kann, entfällt das Zuordnen von Herbeiführungsbeschleunigungsbeträgen.

Wie bereits in analoger Weise im Zusammenhang mit dem Vermeidungsbeschleunigungsbetrag dargelegt, ist bei dem Verfahren im Zusammenhang mit den Herbeiführungsbeschleunigungsbeträgen vorgesehen, dass - wenn mittels des Fahrerassistenzsystems erfasst wird, dass die momentane Fahrtrajektorie des entsprechenden Kollisionsobjekts und die momentane Fahrtrajektorie des Egokraftfahrzeugs einander, zum Beispiel senkrecht oder schräg, schneiden - dem dem entsprechenden Kollisionsobjekt zugeordneten Herbeiführungsbeschleunigungsbetrag ein negatives Vorzeichen oder ein positives Vorzeichen zugewiesen wird.

In weiterer vorteilhafter Ausgestaltung des Verfahrens im Zusammenhang mit dem Herbeiführungsbeschleunigungsbetrag ist vorgesehen, dass - wenn mittels des Fahrerassistenzsystems erfasst wird, dass die momentane Fahrtrajektorie des entsprechenden Kollisionsobjekts und die momentane Fahrtrajektorie des Egokraftfahrzeugs längs zueinander angeordnet sind - dem dem entsprechenden Kollisionsobjekt zugeordneten Herbeiführungsbeschleunigungsbetrag ein negatives Vorzeichen zugewiesen wird. Es gelten hierzu die Ausführungen bzw. Vorteile analog, die im Zusammenhang mit dem Längsverkehr und dem Vermeidungsbeschleunigungsbetrag weiter oben dargelegt sind.

Wie bereits ebenfalls weiter oben dargelegt - und einer weiteren vorteilhaften Ausführungsform des Verfahrens zufolge - wird nur ein einziges der möglichen Kollisionsobjekte als das primäre Kollisionsobjekt bestimmt. Sind also mittels des Fahrerassistenzsystems mehr als ein mögliches Kollisionsobjekt erfasst, beispielsweise zwei mögliche Kollisionsobjekte, so wird eines dieser beiden möglichen Kollisionsobjekte als das primäre Kollisionsobjekt eingestuft, wohingegen das entsprechend andere der beiden Kollisionsobjekte dann nicht als das primäre Kollisionsobjekt eingestuft wird. Beispielsweise kann das andere der Kollisionsobjekte als ein sekundäres Kollisionsobjekt eingestuft werden. Werden mittels des Fahrerassistenzsystems drei oder mehr mögliche Kollisionsobjekte erfasst, so wird nur ein einziges der drei oder mehr Kollisionsobjekte als das primäre Kollisionsobjekt eingestuft, wohingegen die anderen der drei oder mehr Kollisionsobjekte jeweils als ein sekundäres Kollisionsobjekt eingestuft werden. Wie bereits dargelegt, führt dies zu einem besonders effizienten Ablauf des Verfahrens und infolgedessen zu einem besonders effizienten Betrieb des Fahrerassistenzsystems, da für die Kollisionsvorhersage lediglich die Lage-/Geschwindigkeitsbeziehung zwischen dem Egokraftfahrzeug und dem primären Kollisionsobjekt untersucht wird anstatt eine Lage-/Geschwindigkeitsbeziehung zwischen mehreren möglichen Kollisionsobjekten und dem Egokraftfahrzeug.

Die Erfindung betrifft des Weiteren ein Fahrerassistenzsystem für ein Kraftfahrzeug, wobei das Fahrerassistenzsystem dazu konfiguriert ist, ein Verfahren gemäß der vorstehenden Beschreibung durchzuführen. Dementsprechend weist das Fahrerassistenzsystem Mittel auf, die dazu ausgebildet sind, das Verfahren bzw. die Verfahrensschritte des Verfahrens auszuführen.

Zu der Erfindung gehören auch Weiterbildungen des erfindungsgemäßen Fahrerassistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrerassistenzsystems hier nicht noch einmal dargelegt.

Überdies betrifft die Erfindung ein Kraftfahrzeug, das mit einem Fahrerassistenzsystem ausgerüstet ist, das gemäß der vorstehenden Beschreibung ausgebildet ist.

Die Erfindung umfasst auch die Kombinationen der Merkmale der beschriebenen Ausführungsformen.

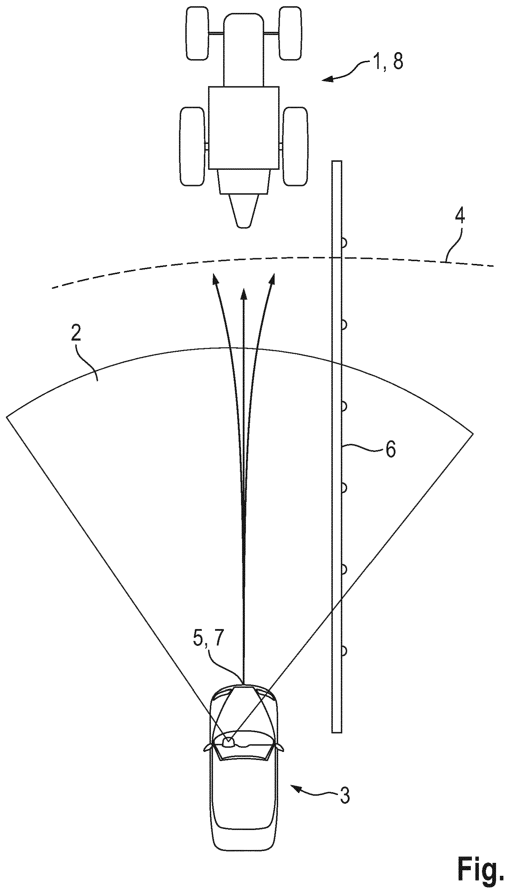

Im Folgenden ist ein Ausführungsbeispiel der Erfindung beschrieben. Hierzu zeigt die einzige Figur in schematischer Draufsicht eine Verkehrssituation, wobei ein Kollisionsobjekt außerhalb eines Sichtfelds des Fahrers angeordnet ist.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

Im Folgenden werden ein Verfahren zum Betreiben eines Fahrerassistenzsystems 5, ein Fahrerassistenzsystem 5 und ein Kraftfahrzeug 3 gemeinsam beschrieben.

Bei der in der einzigen Figur (Fig.) dargestellten Verkehrssituation ist ein Kollisionsobjekt 1 außerhalb eines Sichtfelds 2 eines Fahrers eines Kraftfahrzeugs 3, das im Weiteren als Egokraftfahrzeug bezeichnet wird, angeordnet. Dass das Kollisionsobjekt 1 außerhalb des Sichtfelds 2 angeordnet ist, kann mehrere Ursachen haben. Beispielsweise kann das Kollisionsobjekt 1 zu weit von dem Egokraftfahrzeug 3 entfernt sein, als dass der Fahrer des Egokraftfahrzeugs 3 das Kollisionsobjekt 1 erkennen könnte. Des Weiteren kann das Sichtfeld 2 in natürlicher Weise oder in unnatürlicher Weise eingeschränkt sein, beispielsweise indem ein Sichthindernis 4 zwischen dem Kollisionsobjekt 1 und dem Egokraftfahrzeug 3 bzw. dessen Fahrer angeordnet ist. Bei diesem Sichthindernis kann es sich beispielsweise um einen Natureffekt, beispielsweise Nebel, Gischt, Dunkelheit etc., handeln. Das Sichthindernis 4 ist in der Fig. lediglich durch eine gestrichelte Linie angedeutet.

Das Egokraftfahrzeug 3 ist mit einem Fahrerassistenzsystem 5 ausgestattet, das dazu ausgebildet ist, eine drohende Kollision zwischen dem Egokraftfahrzeug 3 und dem Kollisionsobjekt 1 und/oder weiteren Kollisionsobjekten (nicht dargestellt) zu vermeiden. Hierzu ist das Fahrerassistenzsystem 5 dazu ausgebildet, ein Verfahren zum Betreiben des Fahrerassistenzsystems 5 auszuführen. Demnach weist das Fahrerassistenzsystem 5 und infolgedessen das mit dem Fahrerassistenzsystem 5 ausgerüstete Egokraftfahrzeug 3 Mittel auf, die dazu ausgebildet sind, das Verfahren bzw. Schritte des Verfahrens auszuführen.

In der einzigen Fig. ist des Weiteren eine Verkehrsinfrastruktur 6 dargestellt, die beispielsweise eine Leitplanke umfasst. Die Verkehrsinfrastruktur 6 bzw. die Leitplanke und/oder andere Elemente der Verkehrsinfrastruktur 6 können eine Infrastruktursensorik aufweisen, die von einer Kraftfahrzeugsensorik 7 unterschiedlich ausgebildet ist. Bei der Kraftfahrzeugsensorik kann es sich beispielsweise um eine Sensorik des Fahrerassistenzsystems 5 handeln. Das Egokraftfahrzeug 3, insbesondere dessen Fahrerassistenzsystem 5, sowie die Verkehrsinfrastruktur 6 sind im vorliegenden Beispiel dazu ausgebildet, per Datenkommunikation untereinander Daten auszutauschen. Das bedeutet, dass das Egokraftfahrzeug 3 und die Verkehrsinfrastruktur 6 dazu ausgebildet sind, miteinander in Fahrzeug-zu-Infrastruktur-Datenkommunikation zu treten, um Daten auszutauschen. Bei diesen Daten, die mittels der Fahrzeug-zu-Verkehrsinfrastruktur-Datenkommunikation zwischen der Verkehrsinfrastruktur 6 und dem Egokraftfahrzeug 3 ausgetauscht werden, kann es sich beispielsweise um Sensordaten der Infrastruktursensorik handeln, wobei dann diese Sensordaten der Infrastruktursensorik über die Fahrzeug-zu-Infrastruktur-Datenkommunikation dem Egokraftfahrzeug 3, insbesondere dem Fahrerassistenzsystem 5, bereitgestellt, beispielsweise zugestellt, werden.

Bei dem Verfahren, das mittels des Fahrerassistenzsystems 5 ausgeführt wird, wird eine drohende Kollision mit wenigstens einem möglichen Kollisionsobjekt, beispielsweise dem Kollisionsobjekt 1, erfasst und basierend darauf in dem Egokraftfahrzeug 3 ein Assistenzsignal bereitgestellt. Bei dem Assistenzsignal kann es sich beispielsweise um eine optische, haptische und/oder akustische Warnmeldung handeln, die an den Fahrer des Egokraftfahrzeugs 3 gerichtet ist. Des Weiteren kann das Assistenzsignal ein Steuersignal aufweisen oder zumindest teilweise aus dem Steuersignal gebildet sein, wobei das Steuersignal dazu ausgebildet ist, eine Lenk- und Antriebseinheit des Egokraftfahrzeugs 3 zu steuern oder anzusteuern. Das bedeutet, dass die Lenk- und Antriebseinheit des Egokraftfahrzeugs 3 das Steuersignal des Assistenzsignals als Steuereingabe akzeptiert und basierend auf dem Steuersignal in eine Fahrdynamik des Egokraftfahrzeugs 3 eingreift. Beispielsweise kann die Lenk- und Antriebseinheit dazu ausgebildet sein, aufgrund des Steuersignals das Egokraftfahrzeug 3 zu beschleunigen, abzubremsen und/oder zu lenken.

Es wird bei dem Verfahren ferner das Sichtfeld 2 ausgewertet, indem das Sichtfeld 2 mittels der Sensorik bzw. Kraftfahrzeugsensorik 7 und/oder der Infrastruktursensorik erfasst wird. Anders ausgedrückt wird bei dem Verfahren mittels des Fahrerassistenzsystems 5 das Sichtfeld 2 des Fahrers untersucht. Mit wieder anderen Worten wird bei dem Verfahren mittels des Fahrerassistenzsystems 5 untersucht, welchen Bereich vor dem Egokraftfahrzeug 3 der Fahrer mittels seines Sehapparats abdeckt. Aus der Größe des Sichtfelds und aus einer Entfernung zwischen dem Egokraftfahrzeug 3 und dem Kollisionsobjekt 1 ergibt sich dann je nach Fahrgeschwindigkeit des Egokraftfahrzeugs 3 eine Reaktionszeit, die dem Fahrer zur Verfügung steht, um die drohende Kollision zwischen dem Kraftfahrzeug 3 und dem Kollisionsobjekt 1 noch abzuwenden.

Es wird bei dem Verfahren eine Vielzahl von möglichen Kollisionsobjekten erfasst (wovon in der vorliegenden Fig. nur das Kollisionsobjekt 1 dargestellt ist). Ein einziges der Kollisionsobjekte, vorliegend das Kollisionsobjekt 1, wird als ein primäres Kollisionsobjekt eingestuft, da es von den Kollisionsobjekten, die im Sensorbereich des Fahrerassistenzsystems 5 liegen, dasjenige der Kollisionsobjekte ist, mit dem eine Wahrscheinlichkeit des Kollidierens am höchsten ist. Für das weitere Verfahren wird nun lediglich das primäre Kollisionsobjekt, also das Kollisionsobjekt 1, betrachtet bzw. wird lediglich eine Lage-/Geschwindigkeitsbeziehung zwischen dem primären Kollisionsobjekt 1 und dem Egokraftfahrzeug 3 mittels des Fahrerassistenzsystems 5 untersucht. So wird in Bereitstellungszeitpunkt, zu welchem das Assistenzsignal bereitgestellt wird, basierend auf der voraussichtlichen Reaktionszeit des Fahrers des Egokraftfahrzeugs 3 im Zusammenspiel mit einer voraussichtlichen Zeitspanne bis zu einer Kollision mit dem primären Kollisionsobjekt 1 eingestellt. Es wird also zum Einstellen des Bereitstellungszeitpunkts lediglich das primäre Kollisionsobjekt 1 betrachtet, wohingegen die anderen der Kollisionsobjekte - jeweils als ein sekundäres Kollisionsobjekt eingestuft - zum Einstellen des Bereitstellungszeitpunkts keine Rolle mehr spielen, sobald das primäre Kollisionsobjekt 1 festgelegt ist.

Bevor das primäre Kollisionsobjekt 1 final eingestuft bzw. festgelegt wird, werden die möglichen Kollisionsobjekte mittels der Kraftfahrzeugsensorik 7 und/oder mittels der Infrastruktursensorik erfasst, selbst wenn zumindest eines der möglichen Kollisionsobjekte außerhalb des Sichtfelds des Fahrers des Egokraftfahrzeugs 3 ist. Das bedeutet, dass selbst Kollisionsobjekte, die von dem Fahrer des Egokraftfahrzeugs 3 nicht gesehen werden können, von der (kraftfahrzeuginternen) Kraftfahrzeugsensorik 7 und/oder der Infrastruktursensorik erfasst bzw. detektiert werden. Dementsprechend wird ein entsprechender Sensordatensatz, der das entsprechende der möglichen Kollisionsobjekte charakterisiert, dem Fahrerassistenzsystem 5 zum Bestimmen der Reaktionszeit und/oder des Bereitstellungszeitpunkts bereitgestellt.

Des Weiteren ist vorgesehen, dass selbst Kollisionsobjekte, die außerhalb einer Sensorreichweite der kraftfahrzeuginternen Kraftfahrzeugsensorik 7 liegen, mittels einer Sensorik des Fahrerassistenzsystems 5, beispielsweise der kraftfahrzeugexternen Infrastruktursensorik, erfasst bzw. detektiert werden und ein dementsprechend charakterisierender Datensatz dem Fahrerassistenzsystem 5 bereitgestellt wird. Hierzu stehen - wie bereits beschrieben - das Egokraftfahrzeug 3 und die Verkehrsinfrastruktur 6 miteinander in Datenkommunikation.

Zum Bestimmen bzw. Ermitteln, bei welchem der Kollisionsobjekte es sich um das primäre Kollisionsobjekt handelt, werden zwei Beschleunigungsbeträge definiert, nämlich ein Vermeidungsbeschleunigungsbetrag und ein Herbeiführungsbeschleunigungsbetrag. Der Vermeidungsbeschleunigungsbetrag wird ausschließlich für diejenigen der möglichen Kollisionsobjekte definiert, mit denen eine Kollision mittels des Fahrerassistenzsystems 5 prädiziert wird. Der Vermeidungsbeschleunigungsbetrag beschreibt, welchen Wert eine Beschleunigung des Egokraftfahrzeugs 3 aufweisen muss, um eine drohende Kollision zu dem entsprechenden der möglichen Kollisionsobjekte zu verhindern. Wenn sich eine momentane Fahrtrajektorie des Egokraftfahrzeugs 3 und eine momentane Fahrtrajektorie des entsprechenden der möglichen Kollisionsobjekte schräg oder senkrecht schneiden, also beispielsweise an einer Verkehrskreuzung, ist es möglich, dass für jedes der möglichen Kollisionsobjekte ein positiver Vermeidungsbeschleunigungsbetrag und ein negativer Vermeidungsbeschleunigungsbetrag ermittelt wird.

Unabhängig von dem entsprechend zugewiesenen Vorzeichen ist zunächst der betragsmäßig kleinere Wert des entsprechenden Vermeidungsbeschleunigungsbetrags für das Verfahren relevant. Es kann aber dazu kommen, dass der betragsmäßig höhere Wert als der für das Verfahren relevante Wert erachtet wird, da üblicherweise ein handelsübliches Kraftfahrzeug mit einer höheren Beschleunigung bremsbar ist als es beschleunigbar ("verschnellerbar") ist. Müsste beispielsweise das Egokraftfahrzeug 3 besonders stark geschwindigkeitszunehmend beschleunigt werden, um die Kollision zu vermeiden, und hat der erforderliche geschwindigkeitsabnehmende Vermeidungsbeschleunigungsbetrag in etwa das Niveau des geschwindigkeitszunehmenden Vermeidungsbeschleunigungsbetrags, ist jedoch niedriger, dann ist dem niedrigeren geschwindigkeitsabnehmende Vermeidungsbeschleunigungsbetrag der Vorzug zu geben. Sind die momentane Fahrtrajektorie des Egokraftfahrzeugs 3 und die momentane Fahrtrajektorie des entsprechenden Kollisionsobjekts zueinander längs bzw. parallel ausgerichtet und gleichgerichtet, fallen also die beiden Fahrtrajektorien zusammen, kann für das entsprechende Kollisionsobjekt ohnehin lediglich das negative Vorzeichen vorgesehen werden. Das bedeutet, dass bei einem derartigen Längsszenario der Vermeidungsbeschleunigungsbetrag das negative Vorzeichen bekommt.

Entsprechend dem Betrag bzw. Wert des jeweiligen Vermeidungsbeschleunigungsbetrags der einzelnen Kollisionsobjekte lassen sich diese (sowohl längs als auch quer zueinander) miteinander vergleichen. Je höher der Vermeidungsbeschleunigungsbetrag des entsprechenden Kollisionsobjekts ist, desto relevanter wird das entsprechende Kollisionsobjekt für das mittels des Fahrerassistenzsystems 5 durchzuführende bzw. durchgeführte Verfahren.

Der zweite Beschleunigungsbetrag, nämlich der Herbeiführungsbeschleunigungsbetrag, wird ausschließlich für die Kollisionsobjekte definiert, mit denen keine Kollision prädiziert wird. Der Herbeiführungsbeschleunigungsbetrag beschreibt, mit welchem Beschleunigungsbetrag das Egokraftfahrzeug 3 zu beschleunigen ist, um die Kollision herbeizuführen. In analoger Weise (wie bereits im Zusammenhang mit dem Vermeidungsbeschleunigungsbetrag beschrieben) wird dem jeweiligen Herbeiführungsbeschleunigungsbetrag ein negatives oder ein positives Vorzeichen zugewiesen. Das bedeutet, dass für jedes der möglichen Kollisionsobjekte sowohl ein positiver Herbeiführungsbeschleunigungsbetrag als auch ein negativer Herbeiführungsbeschleunigungsbetrag ermittelt werden kann. Denn die beiden Möglichkeiten des Vorzeichens des Herbeiführungsbeschleunigungsbetrags ergeben sich analog zu den Vorzeichen des Vermeidungsbeschleunigungsbetrags, wenn die momentane Fahrtrajektorie des Egokraftfahrzeugs 3 und die momentane Fahrtrajektorie des entsprechenden Kollisionsobjekts einander schneiden, beispielsweise schräg oder senkrecht. Liegt im Zusammenhang mit dem Herbeiführungsbeschleunigungsbetrag eine Längssituation bzw. Längsverkehrssituation vor, ergibt sich, dass der Herbeiführungsbeschleunigungsbetrag stets ein positives Vorzeichen hat, das Egokraftfahrzeug 3 also zu beschleunigen bzw. zu "verschnellern" ist, um die Kollision zwischen dem Egokraftfahrzeug 3 und dem entsprechenden der möglichen Kollisionsobjekte herbeizuführen.

Mithilfe des Vermeidungs- oder Herbeiführungsbeschleunigungsbetrags kann das primäre Kollisionsobjekt 1 bestimmt werden, indem genau das der möglichen Kollisionsobjekte zum primären Kollisionsobjekt 1 ernannt wird, dem der höchste der Vermeidungsbeschleunigungsbeträge zugewiesen worden ist. Lediglich dann, wenn für keines der möglichen Kollisionsobjekte ein Vermeidungsbeschleunigungsbetrag bestimmbar ist und infolgedessen keinem der infrage kommenden Kollisionsobjekte ein Vermeidungsbeschleunigungsbetrag zugewiesen werden kann, wird das der möglichen Kollisionsobjekte zum primären Kollisionsobjekt ernannt, dem der niedrigste der Herbeiführungsbeschleunigungsbeträge zugewiesen worden ist.

Insgesamt zeigt die Erfindung, wie eine objektspezifische bzw. Kollisionsobjekt-spezifische Reaktionszeitkomponente des primären Kollisionsobjekts zur Ermittlung der Fahrerreaktionszeit und infolgedessen zum Einstellen des Bereitstellungszeitpunkts beim dem Verfahren zum Betreiben des Fahrerassistenzsystems 5, das heißt zu einer Kollisionsvorhersage, herangezogen wird. Damit kann eine Reaktionszeit des Fahrers des Egokraftfahrzeugs 3 in Abhängigkeit der Blickrichtung des Fahrers und einer jeweiligen positionellen Lage der Kollisionsobjekte modelliert werden.

Aus internen Versuchen geht hervor, dass stationäre mögliche Kollisionsobjekte kürzere Reaktionszeitannahmen erfordern, das andernfalls der Fahrer des Egokraftfahrzeugs 3 häufig unerwünscht gewarnt wird, wodurch der Fahrer dann in nachteiliger Weise von dem Verkehrsgeschehen bzw. von dem Erledigen seiner Fahraufgaben abgelenkt wird. Dies lässt sich beispielsweise damit erklären, dass der Fahrer des Egokraftfahrzeugs 3 das stationäre mögliche Kollisionsobjekt frühzeitig wahrnimmt und dementsprechend eine kürzere Reaktionszeit hat.

Ist weiter ein stationäres Kollisionsobjekt als das kritischste bzw. primäre Kollisionsobjekt in der momentanen Verkehrssituation identifiziert worden, kann ebenfalls eine verkürzte Fahrerreaktionszeit für die Kollisionsvorhersage bzw. für den Betrieb des Fahrerassistenzsystems 5 angenommen werden.

### Bezugszeichenliste

- 1: Kollisionsobjekt
- 2: Sichtfeld
- 3: Kraftfahrzeug
- 4: Sichthindernis
- 5: Fahrerassistenzsystem
- 6: Verkehrsinfrastruktur
- 7: Kraftfahrzeugsensorik
- 8: primäres Kollisionsobjekt

## Patentansprüche

1. Verfahren zum Betreiben eines Fahrerassistenzsystems (5), mittels dessen eine einem mit dem Fahrerassistenzsystem (5) ausgestatteten Kraftfahrzeug (3) drohende Kollision mit einem möglichen Kollisionsobjekt (1) erfasst wird und basierend darauf in dem Kraftfahrzeug (3) mittels des Fahrerassistenzsystems (5) ein Assistenzsignal bereitgestellt wird, wobei ein Sichtfeld (2) eines Fahrers des Kraftfahrzeugs (3) mittels einer Sensorik (7) erfasst wird, sodass anhand des Sichtfelds (2) eine voraussichtliche Reaktionszeit des Fahrers bestimmt wird,
**dadurch gekennzeichnet, dass**
eine Vielzahl von möglichen Kollisionsobjekten (1) erfasst wird und eines davon als ein primäres Kollisionsobjekt (8) eingestuft wird und ein Bereitstellungszeitpunkt, zu welchem das Assistenzsignal bereitgestellt wird, basierend auf der voraussichtlichen Reaktionszeit und auf einer voraussichtlichen Zeitspanne bis zur Kollision mit dem primären Kollisionsobjekt (8) eingestellt wird.

2. Verfahren nach Anspruch 1,
**dadurch gekennzeichnet, dass**
die möglichen Kollisionsobjekte (1) mittels der Sensorik (7) erfasst werden, selbst wenn zumindest eines der möglichen Kollisionsobjekte (1) außerhalb des Sichtfelds des Fahrers ist.

3. Verfahren nach Anspruch 1 oder 2,
**dadurch gekennzeichnet, dass**
die möglichen Kollisionsobjekte (1) mittels einer von der Sensorik (7) unterschiedlichen kraftfahrzeugexternen Sensorik erfasst werden, selbst wenn zumindest eines der möglichen Kollisionsobjekte (1) außerhalb einer Sensorreichweite der Sensorik (7) ist.

4. Verfahren nach einem der vorhergehenden Ansprüche,
**dadurch gekennzeichnet, dass**
zum Bestimmen des primären Kollisionsobjekts (8) den möglichen Kollisionsobjekten (1) ein jeweiliger Vermeidungsbeschleunigungsbetrag zugeordnet wird, der einen erforderlichen Beschleunigungsbetrag charakterisiert, mit welchem das Kraftfahrzeug (3) zu beschleunigen ist, um eine Kollision mit dem jeweiligen möglichen Kollisionsobjekt (1) zu vermeiden, wobei das der möglichen Kollisionsobjekte (1) als das primäre Kollisionsobjekt (8) bestimmt wird, dem der höchste der Vermeidungsbeschleunigungsbeträge zugeordnet worden ist.

5. Verfahren nach Anspruch 4,
**dadurch gekennzeichnet, dass**,
wenn mittels des Fahrerassistenzsystems (5) erfasst wird, dass eine momentane Fahrtrajektorie des entsprechenden möglichen Kollisionsobjekts (1) und eine momentane Fahrtrajektorie des Kraftfahrzeugs (3) einander scheiden, dem dem entsprechenden möglichen Kollisionsobjekt (1) zugeordneten Vermeidungsbeschleunigungsbetrag ein negatives Vorzeichen oder ein positives Vorzeichen zugewiesen wird.

6. Verfahren nach Anspruch 4,
**dadurch gekennzeichnet, dass**,
wenn mittels des Fahrerassistenzsystems (5) erfasst wird, dass eine momentane Fahrtrajektorie des entsprechenden möglichen Kollisionsobjekts (1) und eine momentane Fahrtrajektorie des Kraftfahrzeugs (3) längs zueinander angeordnet sind, dem dem entsprechenden möglichen Kollisionsobjekt (1) zugeordneten Vermeidungsbeschleunigungsbetrag ein negatives Vorzeichen zugewiesen wird.

7. Verfahren nach einem der Ansprüche 1 bis 3,
**dadurch gekennzeichnet, dass**
zum Bestimmen des primären Kollisionsobjekts (8) den möglichen Kollisionsobjekten (1) ein jeweiliger Herbeiführungsbeschleunigungsbetrag zugeordnet wird, der einen erforderlichen Beschleunigungsbetrag charakterisiert, mit welchem das Kraftfahrzeug (3) zu beschleunigen ist, um eine Kollision mit dem jeweiligen möglichen Kollisionsobjekt (1) herbeizuführen, wobei das der möglichen Kollisionsobjekte (1) als das primäre Kollisionsobjekt (8) bestimmt wird, dem der niedrigste der Herbeiführungsbeschleunigungsbeträge zugeordnet worden ist.

8. Verfahren nach Anspruch 7,
**dadurch gekennzeichnet, dass**
das primäre Kollisionsobjekt (8) nur dann lediglich anhand des niedrigsten der Herbeiführungsbeschleunigungsbeträge bestimmt wird, wenn ein Zuordnen eines jeweiligen Vermeidungsbeschleunigungsbetrags zu allen der möglichen Kollisionsobjekte (1) verhindert ist.

9. Verfahren nach Anspruch 8,
**dadurch gekennzeichnet, dass**,
wenn mittels des Fahrerassistenzsystems (5) erfasst wird, dass eine momentane Fahrtrajektorie des entsprechenden möglichen Kollisionsobjekts (1) und eine momentane Fahrtrajektorie des Kraftfahrzeugs (3) einander scheiden, dem dem entsprechenden möglichen Kollisionsobjekt (1) zugeordneten Herbeiführungsbeschleunigungsbetrag ein negatives Vorzeichen oder ein positives Vorzeichen zugewiesen wird.

10. Verfahren nach Anspruch 8,
**dadurch gekennzeichnet, dass**
wenn mittels des Fahrerassistenzsystems (5) erfasst wird, dass eine momentane Fahrtrajektorie des entsprechenden möglichen Kollisionsobjekts (1) und eine momentane Fahrtrajektorie des Kraftfahrzeugs (3) längs zueinander angeordnet sind, dem dem entsprechenden möglichen Kollisionsobjekt (1) zugeordneten Herbeiführungsbeschleunigungsbetrag ein negatives Vorzeichen zugewiesen wird.

11. Verfahren nach einem der vorhergehenden Ansprüche,
**dadurch gekennzeichnet, dass**
nur ein einziges der möglichen Kollisionsobjekte (1) als das primäre Kollisionsobjekt (8) bestimmt wird.

12. Fahrerassistenzsystem (5) für ein Kraftfahrzeug (3),
**dadurch gekennzeichnet, dass**
das Fahrerassistenzsystem (5) dazu konfiguriert ist, ein Verfahren nach einem der vorhergehenden Ansprüche durchzuführen.

## Claims

1. Method for operating a driver assistance system (5), by means of which an imminent collision between a motor vehicle (3) equipped with the driver assistance system (5) and a potential collision object (1) is detected and, based on this, an assistance signal is provided in the motor vehicle (3) by means of the driver assistance system (5), wherein a field of vision (2) of a driver of the motor vehicle (3) is detected by means of a sensor system (7), so that an expected reaction time of the driver is determined on the basis of the field of vision (2),
**characterized in that**
a plurality of potential collision objects (1) are detected, one of which is classified as a primary collision object (8), and a provision time at which the assistance signal is provided is set based on the expected reaction time and on an expected period of time until the collision with the primary collision object (8).

2. Method according to claim 1,
**characterized in that**
the potential collision objects (1) are detected by means of the sensor system (7), even if at least one of the potential collision objects (1) is outside the field of vision of the driver.

3. Method according to claim 1 or claim 2,
**characterized in that**
the potential collision objects (1) are detected by means of a sensor system that is external to the motor vehicle and different from the sensor system (7), even if at least one of the potential collision objects (1) is outside a sensor range of the sensor system (7).

4. Method according to any of the preceding claims,
**characterized in that**
to determine the primary collision object (8), a relevant avoidance acceleration amount is assigned to the potential collision objects (1), which characterizes a required acceleration amount with which the motor vehicle (3) is to be accelerated in order to avoid a collision with the relevant potential collision object (1), wherein the collision object of the potential collision objects (1) to which the highest of the avoidance acceleration amounts has been assigned is determined as the primary collision object (8).

5. Method according to claim 4,
**characterized in that**
when it is detected, by means of the driver assistance system (5), that a current travel trajectory of the corresponding potential collision object (1) and a current travel trajectory of the motor vehicle (3) diverge from one another, a negative sign or a positive sign is allocated to the avoidance acceleration amount assigned to the corresponding potential collision object (1).

6. Method according to claim 4,
**characterized in that**
when it is detected, by means of the driver assistance system (5), that a current travel trajectory of the corresponding potential collision object (1) and a current travel trajectory of the motor vehicle (3) are arranged longitudinally to one another, a negative sign is allocated to the avoidance acceleration amount assigned to the corresponding potential collision object (1).

7. Method according to any of claims 1 to 3,
**characterized in that**
to determine the primary collision object (8), a relevant causation acceleration amount is assigned to the potential collision objects (1), which characterizes a required acceleration amount with which the motor vehicle (3) is to be accelerated in order to cause a collision with the relevant potential collision object (1), wherein the collision object of the potential collision objects (1) to which the lowest of the causation acceleration amounts has been assigned is determined as the primary collision object (8).

8. Method according to claim 7,
**characterized in that**
the primary collision object (8) is only determined on the basis of the lowest of the causation acceleration amounts if an assignment of a relevant avoidance acceleration amount to all of the potential collision objects (1) is prevented.

9. Method according to claim 8,
**characterized in that**
when it is detected, by means of the driver assistance system (5), that a current travel trajectory of the corresponding potential collision object (1) and a current travel trajectory of the motor vehicle (3) diverge from one another, a negative sign or a positive sign is allocated to the causation acceleration amount assigned to the corresponding potential collision object (1).

10. Method according to claim 8,
**characterized in that**
when it is detected, by means of the driver assistance system (5), that a current travel trajectory of the corresponding potential collision object (1) and a current travel trajectory of the motor vehicle (3) are arranged longitudinally to one another, a negative sign is allocated to the causation acceleration amount assigned to the corresponding potential collision object (1).

11. Method according to any of the preceding claims,
**characterized in that**
only one of the potential collision objects (1) is determined as the primary collision object (8).

12. Driver assistance system (5) for a motor vehicle (3),
**characterized in that**
the driver assistance system (5) is configured to carry out a method according to any of the preceding claims.

## Revendications

1. Procédé permettant de faire fonctionner un système d'aide à la conduite (5), au moyen duquel une collision menaçant un véhicule automobile (3) équipé du système d'aide à la conduite (5) avec un objet de collision possible (1) est détectée et, sur la base de ladite détection, un signal d'aide est mis à disposition dans le véhicule automobile (3) au moyen du système d'aide à la conduite (5), dans lequel un champ de vision (2) d'un conducteur du véhicule automobile (3) est détecté au moyen d'un système de capteurs (7), de sorte qu'un temps de réaction prévisible du conducteur est déterminé à l'aide du champ de vision (2),
**caractérisé en ce que**
une pluralité d'objets de collision possibles (1) est détectée et l'un d'entre eux est classé comme un objet de collision primaire (8) et un moment de mise à disposition auquel le signal d'aide est mis à disposition est réglé sur la base du temps de réaction prévisible et d'une durée prévisible jusqu'à la collision avec l'objet de collision primaire (8).

2. Procédé selon la revendication 1,
**caractérisé en ce que**
les objets de collision possibles (1) sont détectés au moyen du système de capteurs (7), même si au moins l'un des objets de collision possibles (1) se situe en dehors du champ de vision du conducteur.

3. Procédé selon la revendication 1 ou 2,
**caractérisé en ce que**
les objets de collision possibles (1) sont détectés au moyen d'un système de capteurs externe au véhicule automobile et différent du système de capteurs (7), même si au moins l'un des objets de collision possibles (1) se situe en dehors d'une portée de capteurs du système de capteurs (7).

4. Procédé selon l'une des revendications précédentes,
**caractérisé en ce que**
pour déterminer l'objet de collision primaire (8), on associe aux objets de collision possibles (1) une quantité d'accélération d'évitement respective qui caractérise une quantité d'accélération nécessaire avec laquelle le véhicule automobile (3) doit accélérer pour éviter une collision avec l'objet de collision possible (1) respectif, dans lequel l'objet de collision possible parmi les objets de collision possibles (1) auquel a été associé la plus élevée des quantités d'accélération d'évitement est déterminé comme l'objet de collision primaire (8).

5. Procédé selon la revendication 4,
**caractérisé en ce que,**
lorsqu'il est détecté, au moyen du système d'aide à la conduite (5), qu'une trajectoire de conduite actuelle de l'objet de collision possible (1) correspondant et une trajectoire de conduite actuelle du véhicule automobile (3) sont différentes l'une de l'autre, un signe négatif ou un signe positif est attribué à la quantité d'accélération d'évitement associée à l'objet de collision possible (1) correspondant.

6. Procédé selon la revendication 4,
**caractérisé en ce que,**
lorsqu'il est détecté, au moyen du système d'aide à la conduite (5), qu'une trajectoire de conduite actuelle de l'objet de collision possible (1) correspondant et une trajectoire de conduite actuelle du véhicule automobile (3) sont disposées longitudinalement l'une par rapport à l'autre, un signe négatif est attribué à la quantité d'accélération d'évitement associée à l'objet de collision possible (1) correspondant.

7. Procédé selon l'une des revendications 1 à 3,
**caractérisé en ce que**
pour déterminer l'objet de collision primaire (8), on associe aux objets de collision possibles (1) une quantité d'accélération de réalisation respective qui caractérise une quantité d'accélération nécessaire avec laquelle le véhicule automobile (3) doit accélérer pour réaliser une collision avec l'objet de collision possible (1) respectif, dans lequel l'objet de collision possible parmi les objets de collision possibles (1) auquel a été associé la plus faible des quantités d'accélération de réalisation est déterminé comme l'objet de collision primaire (8).

8. Procédé selon la revendication 7,
**caractérisé en ce que**
l'objet de collision primaire (8) n'est déterminé qu'à l'aide de la plus faible des quantités d'accélération de réalisation lorsqu'une association d'une quantité d'accélération d'évitement respective à tous les objets de collision possibles (1) est empêchée.

9. Procédé selon la revendication 8,
**caractérisé en ce que,**
lorsqu'il est détecté, au moyen du système d'aide à la conduite (5), qu'une trajectoire de conduite actuelle de l'objet de collision possible (1) correspondant et une trajectoire de conduite actuelle du véhicule automobile (3) sont différentes l'une de l'autre, un signe négatif ou un signe positif est attribué à la quantité d'accélération de réalisation associée à l'objet de collision possible (1) correspondant.

10. Procédé selon la revendication 8,
**caractérisé en ce que**
lorsqu'il est détecté, au moyen du système d'aide à la conduite (5), qu'une trajectoire de conduite actuelle de l'objet de collision possible (1) correspondant et une trajectoire de conduite actuelle du véhicule automobile (3) sont disposées longitudinalement l'une par rapport à l'autre, un signe négatif est attribué à la quantité d'accélération de réalisation associée à l'objet de collision possible (1) correspondant.

11. Procédé selon l'une des revendications précédentes,
**caractérisé en ce que**
un seul des objets de collision possibles (1) est déterminé comme l'objet de collision primaire (8).

12. Système d'aide à la conduite (5) pour un véhicule automobile (3),
**caractérisé en ce que**
le système d'aide à la conduite (5) est configuré pour exécuter un procédé selon l'une des revendications précédentes.
